(19) Europäisches Patentamt
European Patent Office
Office européen des brevets

(11) EP 3 819 555 A1

(12) **EUROPEAN PATENT APPLICATION**
published in accordance with Art. 153(4) EPC

(43) Date of publication:
**12.05.2021 Bulletin 2021/19**

(51) Int Cl.:
**F25B 1/00** (2006.01)     **F25B 6/04** (2006.01)
**F25B 39/04** (2006.01)     **F25B 41/04** (2006.01)

(21) Application number: **18925288.5**

(22) Date of filing: **05.07.2018**

(86) International application number:
**PCT/JP2018/025506**

(87) International publication number:
**WO 2020/008590 (09.01.2020 Gazette 2020/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Mitsubishi Electric Corporation Tokyo 100-8310 (JP)**

(72) Inventor: **NAKAJIMA, Komei Tokyo 100-8310 (JP)**

(74) Representative: **Pfenning, Meinig & Partner mbB Patent- und Rechtsanwälte Theresienhöhe 11a 80339 München (DE)**

(54) **REFRIGERATION CYCLE EQUIPMENT**

(57)     An air conditioner (1) includes a refrigerant circuit in which a compressor (10), an outdoor heat exchanger (30), an expansion valve (40), and an indoor heat exchanger (50) are connected in a loop by refrigerant pipes. During cooling operation, the outdoor heat exchanger (30) and the indoor heat exchanger (50) function respectively as a condenser and an evaporator. The outdoor heat exchanger (30) includes a main heat exchanger (32), a subcooling heat exchanger (34), and a bypass circuit. The subcooling heat exchanger (34) is configured to allow refrigerant from the main heat exchanger (32) to flow through the subcooling heat exchanger (34). The bypass circuit is configured to cause the refrigerant to make a detour from the subcooling heat exchanger (34) to an exit side of the outdoor heat exchanger (30).

FIG.1

**Description**

TECHNICAL FIELD

The present disclosure relates to a refrigeration cycle apparatus.

BACKGROUND ART

Japanese Patent Laying-Open No. 2017-219216 (PTL 1) discloses a configuration of a heat exchanger used in a refrigeration cycle apparatus. This heat exchanger includes a main heat exchange region and a sub-heat exchange region. The sub-heat exchange region is disposed to be downstream of the main heat exchange region during a cooling operation in which the heat exchanger is used as a condenser. Refrigerant turns into supercooled liquid refrigerant when flowing in the sub-heat exchange region.

Each heat exchange region includes a plurality of heat transfer tubes provided in parallel. The sub-heat exchange region is configured to have the number of parallel heat transfer tubes (hereinafter also referred to as the "path number") lower than that of the main heat exchange region. This increases a surface coefficient of heat transfer in the heat exchanger to improve the performance of the heat exchanger (see PTL 1).

CITATION LIST

PATENT LITERATURE

PTL 1: Japanese Patent Laying-Open No. 2017-219216

SUMMARY OF INVENTION

TECHNICAL PROBLEM

The capacity of a refrigeration cycle can be adjusted by changing the number of rotations (operating frequency) of a compressor to change a circulation amount of refrigerant. For example, in an air conditioner using a refrigeration cycle, at high room temperature during cooling operation, the number of rotations of a compressor is increased to increase a circulation amount of refrigerant, thereby enhancing cooling capacity (high-load operation). Then, as room temperature decreases, the number of rotations of the compressor is decreased to reduce the circulation amount of refrigerant, thereby restraining the cooling capacity (low-load operation).

In the low-load operation with a small number of rotations of the compressor, a mass flow rate of refrigerant is low, and accordingly, refrigerant starts condensing on a more upstream side than in the high-load operation (e.g., rated operation) in the condenser. For example, in the heat exchanger including the main heat exchange region (hereinafter also referred to as a "main heat exchanger") and the sub-heat exchange region (hereinafter also referred to as a "sub-cooling heat exchanger") as in the heat exchanger disclosed in PTL 1, refrigerant may turn into liquid refrigerant at some midpoint of the main heat exchanger during low-load operation. Since refrigerant (liquid refrigerant) is accumulated in the condenser during low-load operation as described above, an amount of refrigerant required in low-load operation (a total amount of refrigerant sealed in a refrigerant circuit) is larger than an amount of refrigerant required in high-load operation.

In the refrigeration cycle, the amount of refrigerant in the refrigerant circuit affects the performance of the refrigeration cycle. As described below in detail, in a qualitative manner, if the amount of refrigerant is smaller than a proper amount, the degree of supercooling of refrigerant will decrease. As a result, an enthalpy difference decreases in the heat exchanger, leading to decreased performance of the refrigeration cycle. On the other hand, if the amount of refrigerant is larger than the proper amount, a large amount of refrigerant is accumulated in the condenser, leading to a decreased region in gas-liquid two-phase state. As a result, an average surface coefficient of heat transfer in the tube of the condenser decreases, leading to a decreased thermal transmittance. Since condensation temperature rises as the thermal transmittance decreases, a workload of the compressor increases, resulting in decreased performance of the refrigeration cycle. As described above, the performance of the refrigeration cycle decreases if the amount of refrigerant is less or more than the proper amount, and there is such an amount of refrigerant that maximizes the performance of the refrigeration cycle.

The refrigeration cycle apparatus is required to have high performance in high-load operation and also in low-load operation. For example, the air conditioner using a refrigeration cycle enters the high-load operation or the low-load operation depending on room temperature as described above, and is thus required to achieve high performance in both of these operation states. Between in the high-load operation and in the low-load operation, however, a required amount of refrigerant differs, and such an amount of refrigerant that maximizes the performance of the refrigeration cycle also differs. For example, when an amount of refrigerant is set in accordance with the high-load operation (e.g., rated operation), thus, the amount of refrigerant becomes insufficient for the low-load operation, which may decrease the performance in low-load operation.

The present disclosure has been made to solve the above problem, and an object of the present disclosure is to provide a refrigeration cycle apparatus that can achieve high performance in both of the high-load operation and the low-load operation.

SOLUTION TO PROBLEM

A refrigeration cycle apparatus of the present disclosure includes a refrigerant circuit in which a compressor, a condenser, an expansion valve, and an evaporator are connected in a loop by refrigerant pipes. The condenser includes a main heat exchanger, a subcooling heat exchanger, and a bypass circuit. The subcooling heat exchanger is configured to allow refrigerant from the main heat exchanger to flow through the subcooling heat exchanger. The bypass circuit is configured to cause the refrigerant to make a detour from the subcooling heat exchanger to an exit side of the condenser.

Refrigerant in liquid phase (liquid refrigerant) flows through the subcooling heat exchanger through which the refrigerant from the main heat exchanger flows. This refrigeration cycle apparatus, in which the bypass circuit causes the refrigerant (liquid refrigerant) to make a detour from the subcooling heat exchanger to the exit side of the condenser, can reliably restrain accumulation of refrigerant in the condenser.

Thus, this refrigeration cycle apparatus can bring the bypass circuit to become conductive during low-load operation to have a smaller amount of refrigerant required in low-load operation than in the case where no bypass circuit is provided (a case where liquid refrigerant is accumulated in the subcooling heat exchanger). This can reduce a gap between the amount of refrigerant required in high-load operation and the amount of refrigerant required in low-load operation, thus achieving high performance in both of the high-load operation and the low-load operation.

ADVANTAGEOUS EFFECTS OF INVENTION

The refrigeration cycle apparatus of the present disclosure can achieve high performance in both of the high-load operation and the low-load operation.

BRIEF DESCRIPTION OF DRAWINGS

Fig. 1 is an overall configuration diagram of an air conditioner to which a refrigeration cycle apparatus according to Embodiment 1 of the present disclosure is applied.
Fig. 2 shows a flow of refrigerant during cooling operation.
Fig. 3 shows a flow of refrigerant during heating operation.
Fig. 4 shows a state of refrigerant in a condenser during high-load operation.
Fig. 5 shows a state of refrigerant in the condenser during low-load operation.
Fig. 6 is a p-h diagram of a refrigeration cycle.
Fig. 7 is a p-h diagram of the refrigeration cycle.
Fig. 8 shows a qualitative relation between an amount of refrigerant and COP.
Fig. 9 shows a detailed configuration of an outdoor heat exchanger shown in Fig. 1.
Fig. 10 is a flowchart showing a procedure of controlling a switching device by a controller shown in Fig. 1.
Fig. 11 shows a configuration of an outdoor heat exchanger in Modification 1.
Fig. 12 is a flowchart showing a procedure of controlling a three-way valve by the controller.
Fig. 13 shows a configuration of an outdoor heat exchanger in Modification 2.
Fig. 14 shows a configuration of an outdoor heat exchanger in Embodiment 2.
Fig. 15 shows a state of a pressure on-off valve closed.
Fig. 16 shows a state of the pressure on-off valve opened.
Fig. 17 shows another configuration example of the pressure on-off valve.
Fig. 18 shows a configuration of an outdoor heat exchanger in Embodiment 3.
Fig. 19 is an overall configuration diagram of an air conditioner to which a refrigeration cycle apparatus according to Embodiment 4 is applied.

DESCRIPTION OF EMBODIMENTS

Embodiments of the present invention will be described below in detail with reference to the drawings. The same or corresponding parts in the drawings are designated by the same references, and description thereof will not be repeated.

Embodiment 1

<Configuration of Refrigeration Cycle Apparatus>

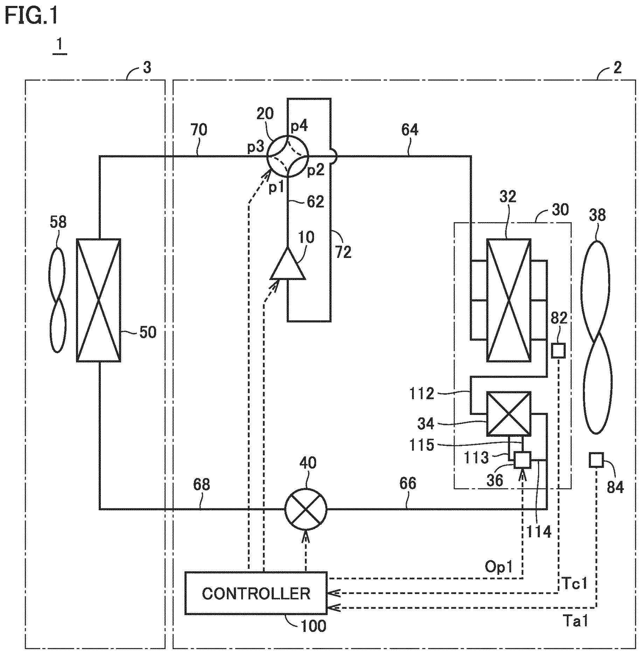

Fig. 1 is an overall configuration diagram of an air conditioner to which a refrigeration cycle apparatus according to Embodiment 1 of the present disclosure is applied. Referring to Fig. 1, an air conditioner 1 includes an outdoor unit 2 and an indoor unit 3. Outdoor unit 2 is placed outdoors, and indoor unit 3 is placed in a space to be air-conditioned (indoors).

Outdoor unit 2 includes a compressor 10, a four-way valve 20, an outdoor heat exchanger 30, a fan 38, and an expansion valve 40. Outdoor unit 2 additionally includes pipes 64, 66, 68, and 70, temperature sensors 82 and 84, and a controller 100. Indoor unit 3 includes an indoor heat exchanger 50 and a fan 58. Indoor unit 3 is connected to outdoor unit 2 through pipes 68 and 70. Compressor 10, four-way valve 20, outdoor heat exchanger 30, expansion valve 40, indoor heat exchanger 50, and pipes 64, 66, 68, and 70 form a refrigerant circuit in a refrigeration cycle.

Pipe 62 connects a discharge port of compressor 10 with a port p1 of four-way valve 20. Pipe 64 connects a port p2 of four-way valve 20 with outdoor heat exchanger 30. Pipe 66 connects outdoor heat exchanger 30 with expansion valve 40. Pipe 68 connects expansion valve 40 with indoor heat exchanger 50. Pipe 70 connects indoor heat exchanger 50 with a port p3 of four-way valve 20. Pipe 72 connects a port p4 of four-way valve 20 with a suction port of compressor 10.

Compressor 10 compresses refrigerant sucked from pipe 72 and outputs the refrigerant to pipe 62. Compressor 10 is configured to adjust the number of rotations (operating frequency) in accordance with a control signal from controller 100. Adjusting the number of rotations of compressor 10 can adjust a circulation amount of refrigerant of the refrigerant circuit, to thereby adjust the capacity of air conditioner 1. Compressor 10 can be of various types, and is of, for example, rotary type, reciprocation type, scroll type, or screw type.

Four-way valve 20 is switched between a first state (cooling operation) and a second state (heating operation) in accordance with a control signal from controller 100. In the first state, port p1 is communicatively connected with port p2, and port p3 is communicatively connected with port p4. In the first state, thus, pipe 62 is connected with pipe 64, and pipe 70 is connected with pipe 72. In the second state, port p1 is communicatively connected with port p3, and port p2 is communicatively connected with port p4. In the second state, thus, pipe 62 is connected with pipe 70, and pipe 64 is connected with pipe 72.

During cooling operation, outdoor heat exchanger 30 functions as a condenser, and condenses refrigerant output from compressor 10 through four-way valve 20 to pipe 64 and outputs the refrigerant to pipe 66. Outdoor heat exchanger 30 is configured to allow high-temperature, high-pressure superheated vapor (refrigerant) output from compressor 10 to exchange heat with (radiate heat to) outdoor air. Through this heat exchange, refrigerant is condensed to turn into a liquid phase. On the other hand, during heating operation, outdoor heat exchanger 30 functions as an evaporator, and evaporates refrigerant output from expansion valve 40 to pipe 66 and outputs the refrigerant to pipe 64.

Outdoor heat exchanger 30 includes a main heat exchanger 32, a subcooling heat exchanger 34, pipes 112 to 115, and a switching device 36. Main heat exchanger 32 and subcooling heat exchanger 34 are connected in series by pipe 112. Main heat exchanger 32 and subcooling heat exchanger 34 are disposed respectively to be connected to pipes 64 and 66.

Main heat exchanger 32 includes a plurality of paths connected in parallel with each other and is configured such that the path number of main heat exchanger 32 is larger than the path number of subcooling heat exchanger 34. In other words, subcooling heat exchanger 34 is configured to have a path number smaller than the path number of main heat exchanger 32. In this example, the path number of main heat exchanger 32 is three, and the path number of subcooling heat exchanger 34 is one.

In air conditioner 1, the performance of outdoor heat exchanger 30 is enhanced by configuring outdoor heat exchanger 30 such that the path number of subcooling heat exchanger 34 is smaller than the path number of main heat exchanger 32. Specifically, in the cooling operation in which outdoor heat exchanger 30 functions as a condenser, refrigerant changes from the gas phase to the liquid phase within outdoor heat exchanger 30. Since refrigerant in the liquid phase (liquid refrigerant) has a surface coefficient of heat transfer lower than that of refrigerant in the gas-liquid two-phase state when changing from the gas phase to the liquid phase, in the condenser, the surface coefficient of heat transfer of the condenser can be increased by increasing a flow velocity of the liquid refrigerant. In air conditioner 1, thus, the flow velocity of liquid refrigerant flowing through subcooling heat exchanger 34 can be increased by causing subcooling heat exchanger 34, through which refrigerant that has changed to the liquid phase by main heat exchanger 32, to have a path number smaller than the path number of main heat exchanger 32. Consequently, the performance (surface coefficient of heat transfer) of outdoor heat exchanger 30 is increased.

The path numbers of main heat exchanger 32 and subcooling heat exchanger 34 are not limited to the numbers described above. The path number of main heat exchanger 32 may be two or four or more, and the path number of subcooling heat exchanger 34 may be more than one.

Pipe 113 connects subcooling heat exchanger 34 with switching device 36. Pipe 114 connects switching device 36 with pipe 66. Pipe 115 connects switching device 36 with subcooling heat exchanger 34. Pipes 113 and 114 form a bypass circuit for causing refrigerant to make a detour from subcooling heat exchanger 34 to pipe 66. Pipe 115 forms a return path for returning refrigerant to subcooling heat exchanger 34.

Switching device 36 is configured to switch between outputting refrigerant, which is output from subcooling heat exchanger 34 to pipe 113 during cooling operation, to pipe 114 to flow the refrigerant to pipe 66 and outputting the refrigerant to pipe 115 to return the refrigerant to subcooling heat exchanger 34. Switching device 36 is controlled by a control signal Op1 from the controller to cause refrigerant to flow from pipe 113 to pipe 115 when air conditioner 1 has a high load and cause refrigerant to flow from pipe 113 to pipe 114 when air conditioner 1 has a low load. During heating operation, switching device 36 operates to cause refrigerant to flow from pipe 115 to pipe 113. The configurations of subcooling heat exchanger 34 and switching device 36 will be described below in detail.

Fan 38 is placed side by side with outdoor heat exchanger 30 and blows air to outdoor heat exchanger 30. During cooling operation, expansion valve 40 decompresses refrigerant output from outdoor heat exchanger 30 to pipe 66 and outputs the refrigerant to pipe 68. Expansion valve 40 is, for example, an electronic expansion valve and has a degree of opening adjusted in accordance with a control signal from controller 100. When the degree of opening of expansion valve 40 is changed so as to be closed, the refrigerant pressure on the exit side of expansion valve 40 decreases, and the degree of dryness of refrigerant increases. When the degree of opening of expansion valve 40 is changed so as to be opened, the refrigerant pressure on the exit side of expansion valve 40 increases, and the degree of dryness of refrigerant decreases.

Temperature sensor 82 detects a condensation temperature Tc1 of refrigerant in outdoor heat exchanger 30 and outputs a detected value to controller 100. Temperature sensor 84 detects an outdoor air temperature Ta1 at a place at which outdoor unit 2 (outdoor heat exchanger 30) is placed and outputs a detected value to controller 100.

Indoor heat exchanger 50 functions as an evaporator during cooling operation, and evaporates refrigerant output from expansion valve 40 to pipe 68 and outputs the refrigerant to pipe 70. Indoor heat exchanger 50 is configured to allow refrigerant which has been decompressed by expansion valve 40 to exchange heat with (absorb heat of) indoor air. Through this heat exchange, refrigerant evaporates to turn into superheated vapor. On the other hand, during heating operation, indoor heat exchanger 50 functions as a condenser, and condenses refrigerant output from compressor 10 through four-way valve 20 to pipe 70 and outputs the refrigerant to pipe 68. Fan 58 is provided side by side with indoor heat exchanger 50 and blows air to indoor heat exchanger 50.

Controller 100 includes a central processing unit (CPU), memories (a read only memory (ROM) and a random access memory (RAM)), an I/O buffer for inputting/outputting various signals, and the like (all of which are not shown). The CPU loads the programs stored in the ROM to the RAM or the like and executes the program. The program stored in the ROM is a program in which the procedure of controller 100 is described. Controller 100 controls each equipment in air conditioner 1 in accordance with these programs. This control may be processed by software, as well as dedicated hardware (electronic circuit).

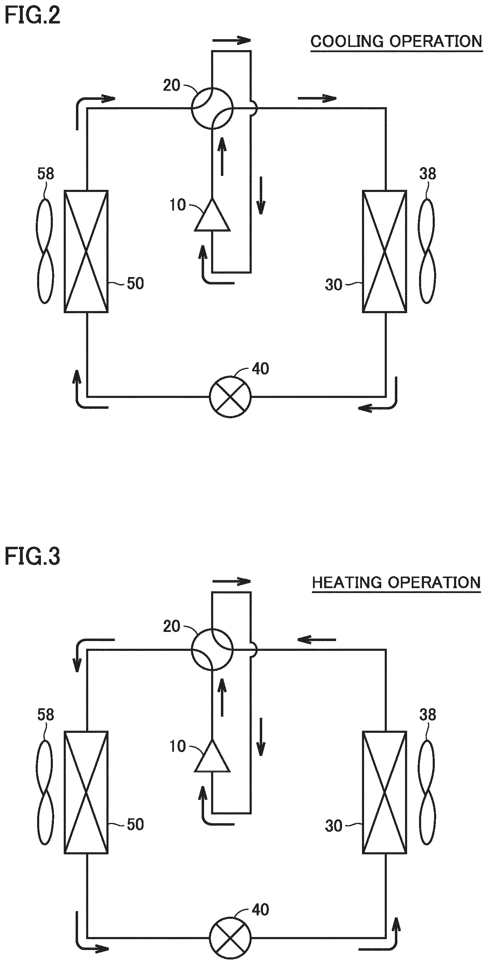

Fig. 2 shows a flow of refrigerant during cooling operation. Referring to Fig. 2, during cooling operation, refrigerant which has turned into high-temperature, high-pressure vapor by compressor 10, is supplied through four-way valve 20 to outdoor heat exchanger 30, and then exchanges heat with (radiates heat to) outdoor air in outdoor heat exchanger 30 to be condensed, thereby turning into high-pressure liquid refrigerant.

Subsequently, the refrigerant is decompressed in expansion valve 40 and is supplied to indoor heat exchanger 50. The refrigerant then exchanges heat with (absorbs heat of) indoor air in indoor heat exchanger 50 to evaporate, thereby turning into low-pressure gas refrigerant. The refrigerant then flows through four-way valve 20 and is sucked again by compressor 10. Thus, the space (the interior of a room) in which indoor heat exchanger 50 is placed is cooled.

Fig. 3 shows a flow of refrigerant during heating operation. Referring to Fig. 3, during heating operation, refrigerant, which has been turned into high-temperature, high-pressure vapor by compressor 10, is supplied through four-way valve 20 to indoor heat exchanger 50. The refrigerant then exchanges heat with (radiates heat to) indoor air in indoor heat exchanger 50 to be condensed, thereby turning into high-pressure liquid refrigerant.

Subsequently, the refrigerant is decompressed in expansion valve 40 and is supplied to outdoor heat exchanger 30. The refrigerant then exchanges heat with (absorbs heat of) outdoor air in outdoor heat exchanger 30 to evaporate, thereby turning into low-pressure gas refrigerant. The refrigerant then flows through four-way valve 20 and is sucked again by compressor 10. Thus, the space (the interior of the room) in which indoor heat exchanger 50 is placed is heated.

<State of Refrigerant in Condenser>

A case where air conditioner 1 performs the cooling operation will be described below unless otherwise specified. It is thus assumed that the refrigerant flows in the direction shown in Fig. 2 and outdoor heat exchanger 30 and indoor heat exchanger 50 function respectively as a condenser and an evaporator.

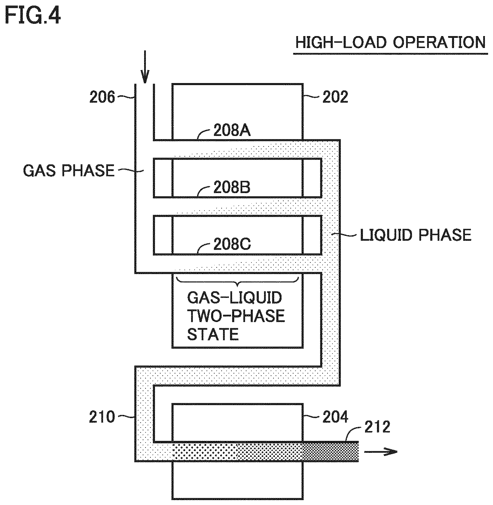

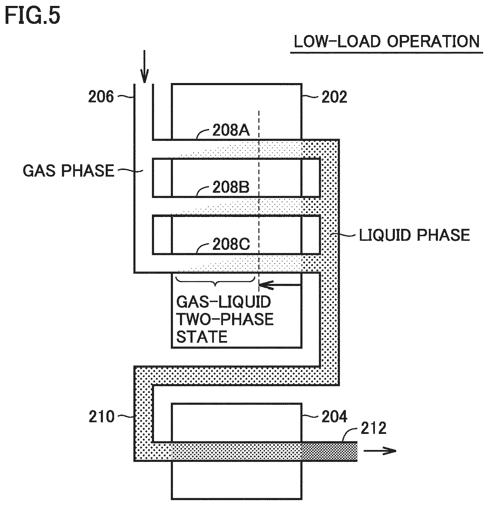

Fig. 4 shows a state of refrigerant in a condenser during high-load operation. On the other hand, Fig. 5 shows a state of refrigerant in the condenser during low-load operation. The condenser shown in Figs. 4 and 5 corresponds to outdoor heat exchanger 30 shown in Fig. 1, but includes neither pipes 113 to 115 nor switching device 36 shown in Fig. 1. In other words, the condenser shown herein correspond to a conventional configuration.

Referring to Fig. 4, this condenser includes a main heat exchanger 202 and a subcooling heat exchanger 204 similarly to outdoor heat exchanger 30. Each heat exchanger has the same path number as that of outdoor heat exchanger 3: the path number of main heat exchanger 202 is three, and the path number of subcooling heat exchanger 204 is one.

In pipe 206 before refrigerant flows into main heat exchanger 202, the refrigerant is in gas phase (superheated vapor). When the refrigerant flows into heat transfer tubes 208A to 208C in main heat exchanger 202, the refrigerant exchanges heat with (radiates heat to) outdoor air to have a decreased degree of dryness. Consequently, the refrigerant enters the gas-liquid two-phase state and enters the liquid state in the vicinity of the output end of main heat exchanger 32.

The refrigerant (liquid refrigerant) which has flowed through main heat exchanger 202 is delivered through pipe 210 to subcooling heat exchanger 204. When the refrigerant flows into subcooling heat exchanger 204, the refrigerant exchanges heat with (radiates heat to) outdoor air to be supercooled state, thereby being output to pipe 212.

Referring to Fig. 5, in the low-load operation in which compressor 10 has a smaller number of rotations than in high-load operation, the refrigerant has a smaller mass flow rate than during high-load operation, and accordingly, the refrigerant starts condensing on the more upstream side than in high-load operation. In low-load operation, thus, the refrigerant changes to the liquid phase in main heat exchanger 202 earlier than in the high-load operation shown in Fig. 4.

As described above, the refrigerant changes its phase in the condenser differently between in high-load operation and in low-load operation: during low-load operation, a more amount of the refrigerant turns into liquid refrigerant to be accumulated in the condenser than during the high-load operation. Consequently, the amount of refrigerant required for the refrigerant circuit in low-load operation is more than the amount of refrigerant required in high-load operation.

<Relation between Amount of Refrigerant and COP>

In the refrigeration cycle, the amount of refrigerant sealed in the refrigerant circuit affects the performance of the refrigeration cycle.

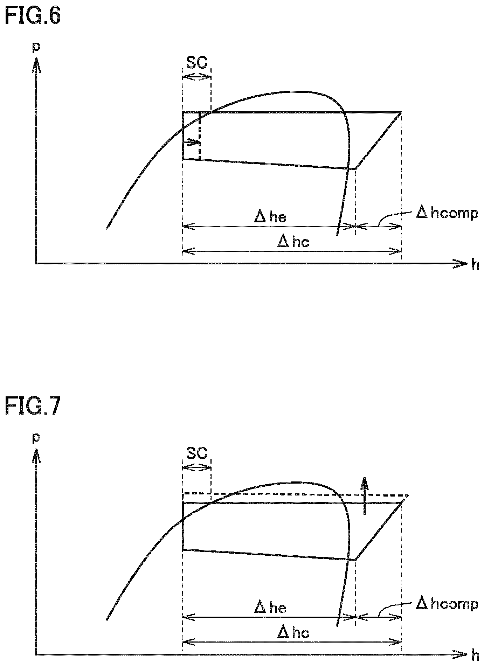

Fig. 6 is a p-h diagram of the refrigeration cycle. Referring to Fig. 6, the vertical axis represents a pressure p (MPa), and the horizontal axis represents a specific enthalpy h (kJ/kg). The solid line indicated by four straight lines represents a state at a time when the refrigeration cycle operates with a certain amount of refrigerant sealed therein. The curved line is a saturated liquid line (saturated vapor line) of the refrigerant.

When the refrigeration cycle is operated with the amount of refrigerant smaller than that in the state indicated by the solid line, a degree of supercooling SC of the refrigerant decreases. As a result, an enthalpy difference $\Delta hc$ in the condenser (outdoor heat exchanger 30 during cooling operation) decreases.

A cooling capacity Qe of the refrigeration cycle can be represented by the following equation.

$$Qe = Gr \times \Delta he \ \dots \ (1)$$

where Gr represents a circulation flow rate (kg/s) of refrigerant, and $\Delta he$ represents an enthalpy difference in the evaporator (indoor heat exchanger 50 during cooling operation).

A heating capacity Qc of the refrigeration cycle can be represented by the following equation.

$$Qc = Gr \times \Delta hc \ \dots \ (2)$$

where $\Delta hc$ represents an enthalpy difference in the condenser during heating operation (indoor heat exchanger 50 during heating operation).

As can be seen from the diagram, when degree of supercooling SC of refrigerant decreases, enthalpy differences $\Delta he$ and $\Delta hc$ decrease, and accordingly, cooling capacity Qe and heating capacity Qc of the refrigeration cycle decrease. In order to obtain cooling capacity Qe and heating capacity Qc equal to those during heating operation, indicated by the solid line, with a small amount of refrigerant, thus, the power (workload) of the compressor needs to be increased for increased circulation amount Gr of refrigerant.

Power Wcomp of the compressor is represented by the following equation.

$$Wcomp = Gr \times \Delta hcomp \ldots (3)$$

where $\Delta hcomp$ represents an enthalpy difference in the compressor. As descried above, power Wcomp of the compressor increases as circulation amount Gr of the refrigerant increases.

A coefficient of performance (COP) indicating the performance of the refrigeration cycle is represented by the following equations.

$$\text{Cooling operation: } COP = Qe/Wcomp = \Delta he/\Delta hcomp \ldots (4)$$

$$\text{Heating operation: } COP = Qc/Wcomp = \Delta hc/\Delta hcomp \ldots (5)$$

It can be seen from Equations (4) and (5) that when power Wcomp of the compressor increases, the COP of the refrigeration cycle decreases. As described above, when the refrigeration cycle is operated with a small amount of refrigerant, degree of supercooling SC of the refrigerant decreases, leading to decreased performance of the refrigeration cycle.

Also when the refrigeration cycle is operated with an excessively large amount of refrigerant sealed in the refrigerant circuit, on the other hand, the performance of the refrigeration cycle decreases. This will be described below.

With a larger amount of refrigerant sealed in the refrigerant circuit, a larger amount of refrigerant (liquid refrigerant) is accumulated in the condenser (outdoor heat exchanger 30 during cooling operation). When the liquid refrigerant is accumulated in the condenser, the region in gas-liquid two-phase state in the condenser decreases. Since the surface coefficient of heat transfer of refrigerant in gas-liquid two-phase state is several times higher than the surface coefficient of heat transfer of refrigerant in liquid state, when the region in gas-liquid two-phase state decreases, an average surface coefficient of heat transfer in the tube $\alpha i$ in the condenser decreases, leading to decreased thermal transmittance K of the condenser.

Herein, an amount of heat exchange Q between refrigerant and air in the condenser is represented by the following equation.

$$Q = A \times K \times (Tc - Ta) \ldots (6)$$

where A represents a surface area outside the pipe of the condenser, Tc represents a condensation temperature, and Ta represents a temperature of sucked air of the condenser (outdoor air temperature).

When thermal transmittance K decreases due to a large amount of refrigerant sealed in the refrigerant circuit, the capacity per se on the refrigerant side does not change, and also, surface area outside the pipe A does not change. Thus, condensation temperature Tc rises when temperature Ta is constant. When condensation temperature Tc rises, pressure p in the condenser rises as indicated by the dotted line in the p-h diagram of Fig. 7. Thus, enthalpy difference $\Delta hcomp$ in the compressor increases, and power Wcomp of the compressor increases as indicated by Equation (3). As a result, the COP of the refrigeration cycle decreases.

The performance of the refrigeration cycle decreases in both of the case where the amount of refrigerant is excessively small and the case where the amount of refrigerant is excessively large as described above, and accordingly, there is such an amount of refrigerant that maximizes the performance of the refrigeration cycle.

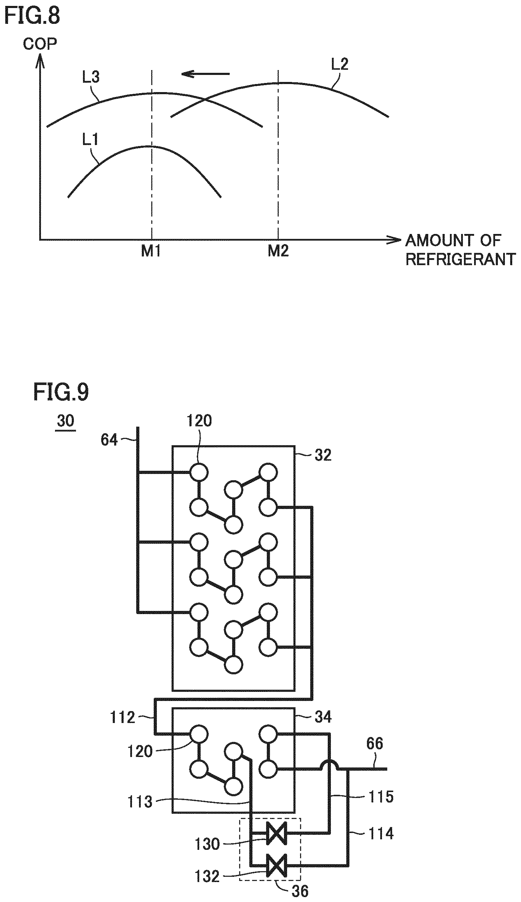

Fig. 8 shows a qualitative relation between an amount of refrigerant and COP. Referring to Fig. 8, a line L1 indicates the relation between the amount of refrigerant and COP on a high-load condition on which the refrigeration cycle operates at high load. A line L2 indicates the relation between an amount of refrigerant and COP on a low-load condition on which the refrigeration cycle operates at low load. Since an amount of refrigerant required for the refrigerant circuit in low-load operation is larger than the amount of refrigerant required in high-load operation as described with reference to Figs. 4 and 5, an amount of refrigerant M2 that maximizes the performance of the refrigeration cycle on the low-load condition is larger than an amount of refrigerant M1 that maximizes the performance of the refrigeration cycle on the high-load condition.

High performance is required for the refrigeration cycle apparatus in high-load operation and also in low-load operation. Air conditioner 1 to which the refrigeration cycle apparatus is applied performs the high-load operation or the low-load operation depending on room temperature as in Embodiment 1, and is thus required to achieve high performance for both of the operation states.

However, the amount of refrigerant that maximizes the performance of the refrigeration cycle apparatus differs between in high-load operation and in low-load operation. For this reason, when the amount of refrigerant is set to M1 in accordance with the high-load operation, the COP is maximized in high-load operation, but the amount of refrigerant becomes insufficient in low-load operation. This leads to decreased COP in low-load operation.

In air conditioner 1 to which the refrigeration cycle apparatus according to Embodiment 1 is applied, thus, a bypass circuit (pipes 113 and 114 and switching device 36 in Fig. 1) for causing refrigerant to make a detour from subcooling heat exchanger 34 to pipe 66 on the exit side of outdoor heat exchanger 30 is provided. This bypass circuit is used to cause refrigerant (liquid refrigerant) accumulated in subcooling heat exchanger 34 to make a detour to the exit side of subcooling heat exchanger 34 during low-load operation. This can restrain accumulation of refrigerant (liquid refrigerant) in subcooling heat exchanger 34 during low-load operation, leading to a smaller amount of refrigerant required during low-load operation than when no bypass circuit is provided (when liquid refrigerant is accumulated in subcooling heat exchanger 34).

In other words, as the bypass circuit is activated during low-load operation, the amount of refrigerant required for the refrigerant circuit in low-load operation can be decreased, thus shifting the relation between the amount of refrigerant and COP on the low-load condition from line L2 to line L3 (Fig. 8). This can decrease a gap between amount of refrigerant M1 that maximizes the performance of the refrigeration cycle on the high-load condition and the amount of refrigerant that maximizes the performance of the refrigeration cycle on the low-load condition, thus achieving high performance in both of the high-load operation and the low-load operation.

<Configuration of Bypass Circuit>

Fig. 9 shows a detailed configuration of outdoor heat exchanger 30 shown in Fig. 1. Referring to Fig. 9, main heat exchanger 32 and subcooling heat exchanger 34 each include heat transfer tubes 120. Main heat exchanger 32 includes three paths connected in parallel with each other, and each path is composed of heat transfer tubes 120 (six heat transfer tubes in this example) connected in series. The path number of subcooling heat exchanger 34 is one, and subcooling heat exchanger 34 is also composed of heat transfer tubes 120 (six heat transfer tubes in this example).

Switching device 36 includes solenoid valves 130 and 132. Solenoid valve 130 is provided between pipe 113 and pipe 115. Solenoid valve 132 is provided between pipe 113 and pipe 114. Switching device 36 can switch between two flow paths from some midpoint of subcooling heat exchanger 34. Specifically, one is a flow path in which refrigerant again flows into the remaining heat transfer tubes of subcooling heat exchanger 34 through solenoid valve 130 (which is referred to as flow path A), and the other is a flow path in which refrigerant flows to pipe 66 through solenoid valve 132 (which is referred to as flow path B).

When solenoid valves 130 and 132 are respectively opened and closed, flow path A is formed, and refrigerant flows through all the heat transfer tubes provided in subcooling heat exchanger 34. On the other hand, when solenoid valves 130 and 132 are respectively closed and opened, flow path B is formed, and refrigerant flows to pipe 66 through the bypass circuit. Solenoid valves 130 and 132 are controlled to be opened and closed by controller 100 (Fig. 1) depending on the load of air conditioner 1.

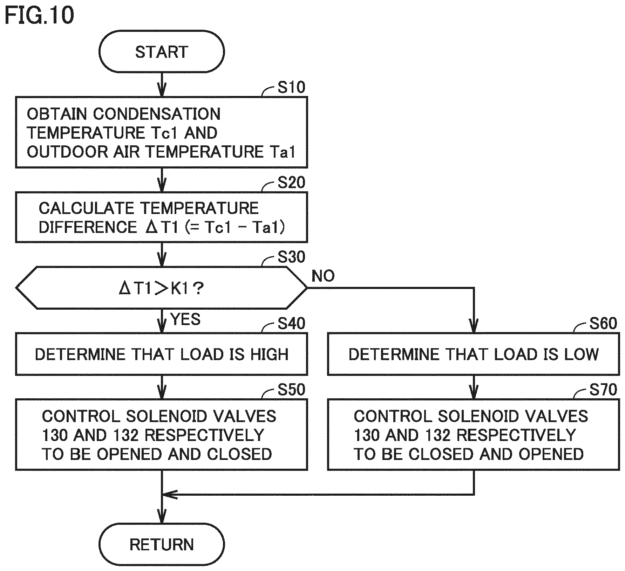

Fig. 10 is a flowchart showing a procedure of controlling switching device 36 by controller 100 shown in Fig. 1. A series of processes shown in this flowchart are repeatedly performed per predetermined period of time during the cooling operation of air conditioner 1.

Referring to Fig. 10, controller 100 determines whether the load of air conditioner 1 is high or low through the processes of steps S10 to S30, and in accordance with a result of the determination, controls solenoid valves 130 and 132 of switching device 36 to be opened and closed.

Specifically, controller 100 obtains, from temperature sensors 82 and 84 (Fig. 1), condensation temperature Tc1 and outdoor air temperature Ta1, respectively (step S10). Controller 100 then calculates a temperature difference ΔT1 between condensation temperature Tc1 and outdoor air temperature Ta1 (step S20). Controller 100 then determines whether the calculated temperature difference ΔT1 is greater than a threshold K1 (step S30). Threshold K1 is a value against which whether the load of air conditioner 1 is high or low is determined. Threshold K1 is obtained by, for example, prior evaluation or simulation of air conditioner 1 and is stored in the ROM of controller 100.

In Embodiment 1, whether the load of air conditioner 1 is high or low is determined based on temperature difference ΔT1 between condensation temperature Tc1 and outdoor air temperature Ta1, as described above. When air conditioner 1 has a high load, amount of heat exchange Q between refrigerant and air is also large in the condenser (outdoor heat exchanger 30 during cooling operation), and accordingly, temperature difference ΔT1 between condensation temperature Tc1 and outdoor air temperature Ta1 increases, as can be seen from Equation (6) above. In other words, the load of air conditioner 1 can be determined to be high when temperature difference ΔT1 is large, and the load of air conditioner 1 can be determined to be low when temperature difference ΔT1 is small.

When determining at step S30 that temperature difference $\Delta T1$ is greater than threshold K1 (YES at step S30), controller 100 determines that air conditioner 1 is operated at high load (step S40). Controller 100 then controls solenoid valves 130 and 132 of switching device 36 respectively to be opened and closed (step S50). Consequently, the refrigerant flows through all the heat transfer tubes in subcooling heat exchanger 34 without being bypassed by the bypass circuit.

On the other hand, when determining at step S30 that temperature difference $\Delta T1$ is not more than threshold K1 (NO at step S30), controller 100 determines that air conditioner 1 is operated at low load (step S60). Controller 100 then controls solenoid valves 130 and 132 of switching device 36 respectively to be closed and opened (step S70). Consequently, the refrigerant flows to pipe 66 from subcooling heat exchanger 34 through the bypass circuit.

As described above, Embodiment 1, in which the refrigerant (liquid refrigerant) flows through the bypass circuit to the exit side of outdoor heat exchanger 30 from subcooling heat exchanger 34 during low-load operation, can reliably restrain accumulation of refrigerant in outdoor heat exchanger 30 during low-load operation. This can reduce the amount of refrigerant required in low-load operation, thus reducing a gap between the amount of refrigerant required in high-load operation and the amount of refrigerant required in low-load operation. Embodiment 1 can thus achieve high performance in both of the high-load operation and the low-load operation.

Embodiment 1, in which outdoor heat exchanger 30 is composed of main heat exchanger 32 and subcooling heat exchanger 34, can thus achieve high performance regardless of the load of outdoor heat exchanger 30 by further including a bypass circuit while achieving improvements in the performance (improvements in surface coefficient of heat transfer) of outdoor heat exchanger 30 owing to the above configuration.

Modification 1

Solenoid valves 130 and 132 may be replaced with a three-way valve.

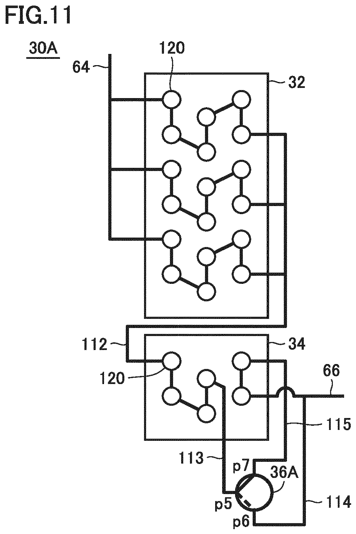

Fig. 11 shows a configuration of an outdoor heat exchanger in Modification 1. Air conditioner 1 according to Modification 1 includes an outdoor heat exchanger 30A in place of outdoor heat exchanger 30 in Embodiment 1.

Referring to Fig. 11, outdoor heat exchanger 30A includes, in outdoor heat exchanger 30 shown in Fig. 9, a three-way valve 36A in place of switching device 36. Three-way valve 36A has ports p5 to p7. Pipes 113 to 11 are respectively connected to ports p5 to p7.

When port p5 and port p7 are communicatively connected with each other by three-way valve 36A, flow path A is formed, and refrigerant flows through all the heat transfer tubes provided in subcooling heat exchanger 34. On the other hand, when port p5 and port p6 are communicatively connected with each other by three-way valve 36A, flow path B is formed, and refrigerant is bypassed to pipe 66 by the bypass circuit. The operation of three-way valve 36A is then controlled by controller 100 depending on the load of air conditioner 1.

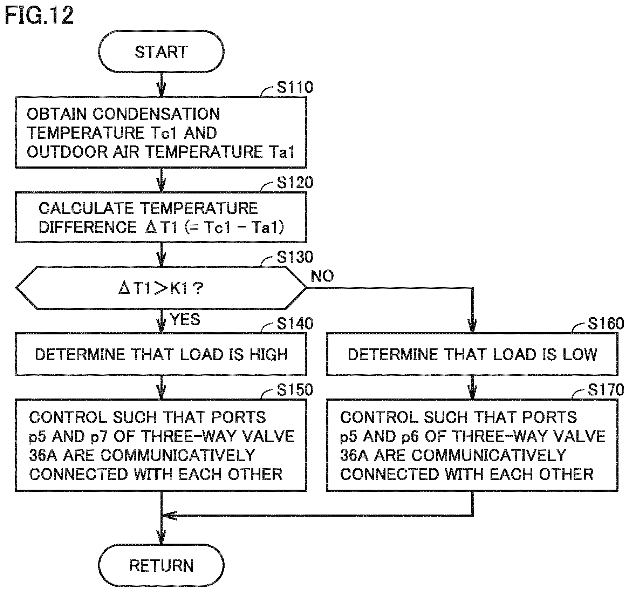

Fig. 12 is a flowchart showing a procedure of controlling three-way valve 36A by controller 100. This flowchart corresponds to Fig. 10 described in Embodiment 1, and a series of processes shown in this flowchart are repeatedly performed per predetermined period of time during the cooling operation of air conditioner 1.

Referring to Fig. 12, the processes of steps S110 to S140 and S160 shown in this flowchart are respectively identical to the processes of steps S10 to S40 and S60 shown in Fig. 10. This flowchart includes steps S150 and S170 respectively in place of steps S50 and S70 shown in the flowchart of Fig. 10.

In other words, when determining at step S140 that air conditioner 1 is operated at high load (step S140), controller 100 controls three-way valve 36A such that port p5 and port p7 of three-way valve 36A are communicatively connected with each other (step S150). Thus, when air conditioner 1 is operated at high load, refrigerant flows through all the heat transfer tubes in subcooling heat exchanger 34 without being bypassed by the bypass circuit.

When determining at step S160 that air conditioner 1 is operated at low load (step S160), controller 100 controls three-way valve 36A such that port p5 and port p6 of three-way valve 36A are communicatively connected with each other (step S170). Thus, when air conditioner 1 is operated at low load, refrigerant flows through the bypass circuit from subcooling heat exchanger 34 to pipe 66.

Modification 1 can also achieve effects similar to those of Embodiment 1.

Modification 2

In Modification 2, a capillary tube is provided in a bypass circuit. Providing the capillary tube can decrease a pressure on the exit side of outdoor heat exchanger 30, that is, the exit side of subcooling heat exchanger 34, when refrigerant flows through the bypass circuit to pipe 66. Pressure can be decreased by the capillary tube such that the pressure on the exit side of subcooling heat exchanger 34 can be lower than a saturation pressure of refrigerant at outdoor air temperature, to thereby suck refrigerant present from solenoid valve 130 to the exit side of subcooling heat exchanger 34 into pipe 66. This can reliably restrain accumulation of refrigerant in subcooling heat exchanger 34.

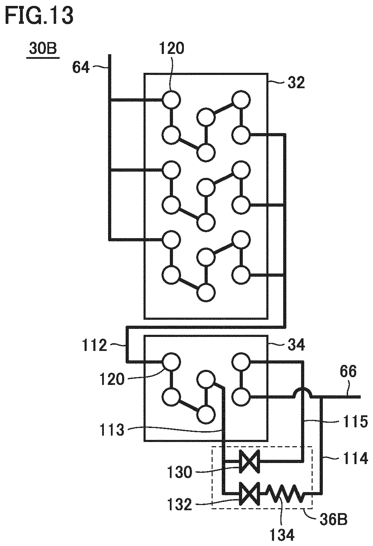

Fig. 13 shows a configuration of an outdoor heat exchanger in Modification 2. Air conditioner 1 according to Modification 2 includes an outdoor heat exchanger 30B in place of outdoor heat exchanger 30 in Embodiment 1.

Referring to Fig. 13, outdoor heat exchanger 30B includes, in outdoor heat exchanger 30 shown in Fig. 9, a switching device 36B in place of switching device 36. Switching device 36B further includes a capillary tube 134 in switching device 36.

Capillary tube 134 is connected between solenoid valve 132 and pipe 114. Capillary tube 134 is, for example, a capillary tube made of copper. As refrigerant flows through capillary tube 134, the pressure of the refrigerant decreases. As an example, capillary tube 134 is designed such that during low-load operation, the pressure on the output side of capillary tube 134 is sufficiently lower than the saturation pressure of the refrigerant at outdoor air temperature even when outdoor air temperature varies within the range of specifications.

As described above, Modification 2 including capillary tube 134 can reliably restrain accumulation of refrigerant in subcooling heat exchanger 34 when refrigerant flows through the bypass circuit to pipe 66.

Though not particularly shown, capillary tube 134 may be provided on the exit side of port p6 of three-way valve 36A (Fig. 11) in Modification 1 described above.

Embodiment 2

In Embodiment 2, a mechanical pressure on-off valve is provided in the bypass circuit in place of solenoid valves 130 and 132 and three-way valve 36A described above. This eliminates the need for electric equipment for activating a valve, leading to a reduced device cost.

Air conditioner 1 in Embodiment 2 includes, in the configuration of the air conditioner shown in Fig. 1, an outdoor heat exchanger 30C in place of outdoor heat exchanger 30.

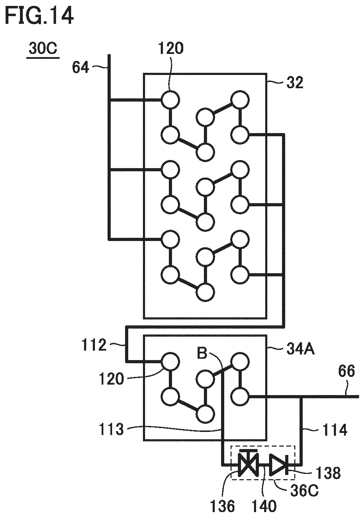

Fig. 14 shows a configuration of outdoor heat exchanger 30C in Embodiment 2. Referring to Fig. 14, outdoor heat exchanger 30C includes main heat **exchanger** 32, a subcooling heat exchanger 34A, and a switching device 36C. Subcooling heat exchanger 34A has a branch portion B, and pipe 113 is connected to branch portion B.

Switching device 36C includes a pressure on-off valve 136 and a check valve 138. Pressure on-off valve 136 is provided between pipe 113 and pipe 140. Check valve 138 is provided between pipe 140 and pipe 114.

Pressure on-off valve 136 needs no electric power for opening and closing operations. Pressure on-off valve 136 is configured to be closed when the pressure of pipe 113 exceeds a prescribed pressure and to be opened when the pressure of pipe 113 is lower than the prescribed pressure. A specific configuration of pressure on-off valve 136 will be described below.

Check valve 138 prevents refrigerant from flowing from pipe 114 through switching device 36C to pipe 113. Check valve 138 serves to prevent refrigerant from flowing from pipe 66 through switching device 36C to branch portion B of subcooling heat exchanger 34A when outdoor heat exchanger 30C operates as an evaporator (during heating operation).

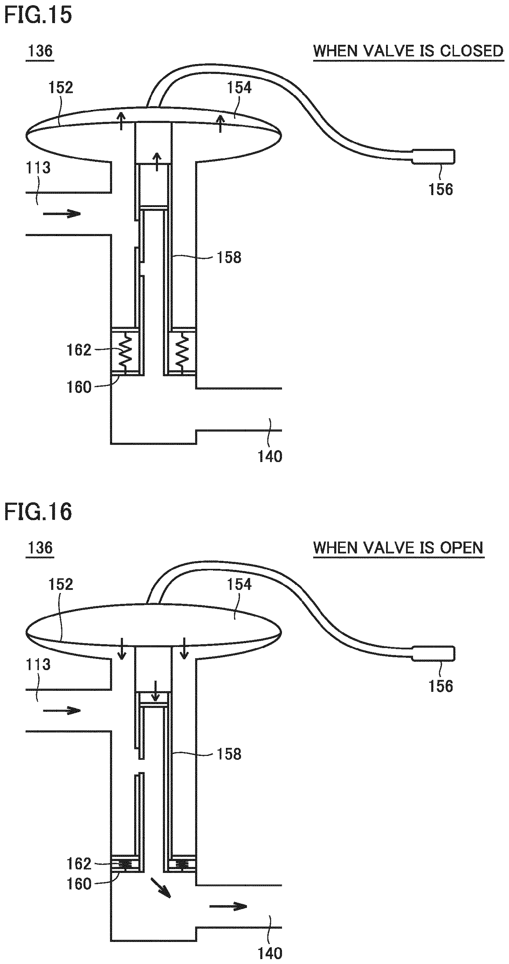

Figs. 15 and 16 show an example configuration of pressure on-off valve 136. Fig. 15 shows the state of pressure on-off valve 136 opened, and Fig. 16 shows the state of pressure on-off valve 136 closed.

Referring to Figs. 15 and 16, pressure on-off valve 136 includes a diaphragm 152, a noncondensable gas 154, a temperature sensitive cylinder 156, a valve body 158, a valve seat 160, and a spring 162. Valve body 158 and valve seat 160 are hollow tubular members and are configured such that valve body 158 is movable vertically relative to valve seat 160 with the inner circumference surface of valve body 158 and the outer circumference surface of valve seat 160 contacting each other. The upper portion of valve body 158 is connected to diaphragm 152. Valve seat 160 is fixed to the side wall of pressure on-off valve 136, and the interior of valve body 158 is in communication with pipe 140. Also, valve body 158 and valve seat 160 are connected by spring 162.

Diaphragm 152 moves upward when the pressure of pipe 113 increases and moves downward when the pressure of pipe 113 decreases. Thus, when the pressure of pipe 113 increases, valve body 158 moves upward together with diaphragm 152 relative to valve seat 160. On the other hand, when the pressure of pipe 113 decreases, valve body 158 moves downward together with diaphragm 152 relative to valve seat 160.

Each of valve body 158 and valve seat 160 is provided with an opening. The opening of valve body 158 and the opening of valve seat 160 are formed so as to overlap each other when valve body 158 moves downward relative to valve seat 160. The openings are formed so as not to overlap each other when valve body 158 moves upward relative to valve seat 160.

With such a configuration, when the pressure of pipe 113 decreases, valve body 158 moves downward as diaphragm 152 moves downward, so that pipe 140 is in communication with pipe 113 through the openings of valve body 158 and valve seat 160. During low-load operation, since a flow rate at which refrigerant circulates is low, the pressure in outdoor heat exchanger 30C, that is, the pressure of pipe 113 is relatively low, thereby opening pressure on-off valve 136 (Fig. 16).

On the other hand, when the pressure of pipe 113 increases, valve body 158 moves upward as diaphragm 152 moves upward, and the openings thereof deviate from each other. As a result, pipe 113 and pipe 140 are not in communication with each other. During high-load operation, since a flow rate at which refrigerant circulates is high, the pressure of pipe 113 is relatively high, thereby closing pressure on-off valve 136 (Fig. 15).

Pressure on-off valve 136 includes a temperature sensitive cylinder 156. Temperature sensitive cylinder 156 is exposed to outdoor air, and the pressure of noncondensable gas 154 increases as outdoor air temperature is higher. Providing such a temperature sensitive cylinder 156 can prevent the pressure of refrigerant from increasing due to a high outdoor air temperature to close pressure on-off valve 136 irrespective of operation load. In other words, providing temperature sensitive cylinder 156 can reduce dependence of the opening and closing operations of pressure on-off valve 136 on outside air temperature, thus activating pressure on-off valve 136 in accordance with operation load.

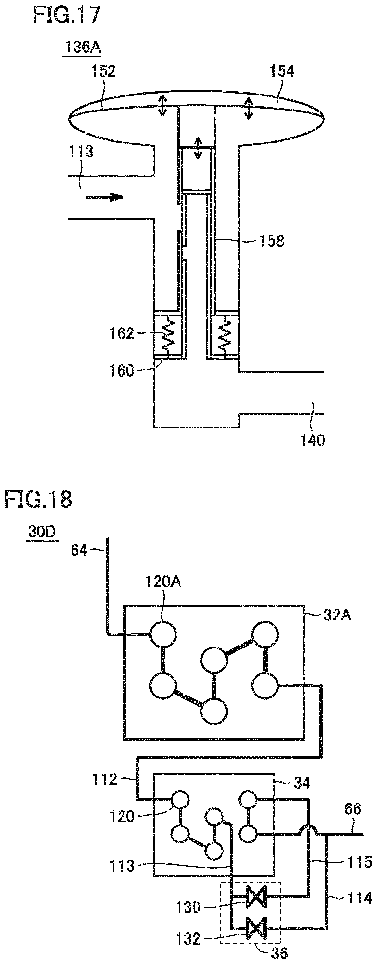

However, temperature sensitive cylinder 156 described above is not an essential component. As shown in Fig. 17, a pressure on-off valve 136A without temperature sensitive cylinder 156 may be adopted.

As described above, Embodiment 2 including mechanical pressure on-off valve 136 requires no electric equipment for operating a vale, leading to reduced device cost.

Embodiment 3

In the embodiments and modifications described above, the path number of subcooling heat exchanger 34 is made smaller than the path number of main heat exchanger 32 to increase a flow velocity in subcooling heat exchanger 34, leading to enhanced performance (surface coefficient of heat transfer) of outdoor heat exchanger 30.

In Embodiment 3, a tube diameter of the heat transfer tube of subcooling heat exchanger 34 is made smaller than the tube diameter of the heat transfer tube of main heat exchanger 32 to increase the flow velocity in subcooling heat exchanger 34, leading to enhanced performance (surface coefficient of heat transfer) of outdoor heat exchanger 30.

Also in Embodiment 3, a bypass circuit is formed from subcooling heat exchanger 34, and refrigerant (liquid refrigerant) flows through the bypass circuit from subcooling heat exchanger 34 to the exit side of outdoor heat exchanger 30 during low-load operation.

Air conditioner 1 in Embodiment 3 includes, in the configuration of the air conditioner shown in Fig. 1, an outdoor heat exchanger 30D in place of outdoor heat exchanger 30.

Fig. 18 shows a configuration of an outdoor heat exchanger 30D in Embodiment 3. Referring to Fig. 18, outdoor heat exchanger 30D includes a main heat exchanger 32A, subcooling heat exchanger 34, and switching device 36. Subcooling heat exchanger 34 and switching device 36 are as described with reference to Fig. 9.

Main heat exchanger 32A includes a plurality of heat transfer tubes 120A (six heat transfer tubes in this example) connected in series. Heat transfer tube 120A has a tube diameter larger than the tube diameter of heat transfer tube 120 in subcooling heat exchanger 34. In other words, heat transfer tube 120 of subcooling heat exchanger 34 has a tube diameter smaller than the tube diameter of heat transfer tube 120A of main heat exchanger 32A. This increases the flow velocity of liquid refrigerant flowing through subcooling heat exchanger 34 with respect to main heat exchanger 32A, to thereby enhance the performance (surface coefficient of heat transfer) of outdoor heat exchanger 30D.

Although outdoor heat exchanger 30D includes switching device 36 in Embodiment 3, as in the modifications and Embodiment 2 described above, three-way valve 36A may be adopted in place of switching device 36, switching device 36B including capillary tube 134 may be adopted, or switching device 36C including pressure on-off valve 136 and check valve 138 may be adopted in Embodiment 3.

As described above, Embodiment 3 can also achieve effects similar to those of the embodiments and the modifications described above.

Embodiment 4

Indoor heat exchanger 50 functioning as a condenser during heating operation may also be composed of a main heat exchanger and a subcooling heat exchanger, and may be configured such that refrigerant can flow through a bypass circuit from the subcooling heat exchanger of indoor heat exchanger 50. Consequently, an air conditioner is achieved that can achieve high performance in both of the high-load operation and the low-load operation also during heating operation.

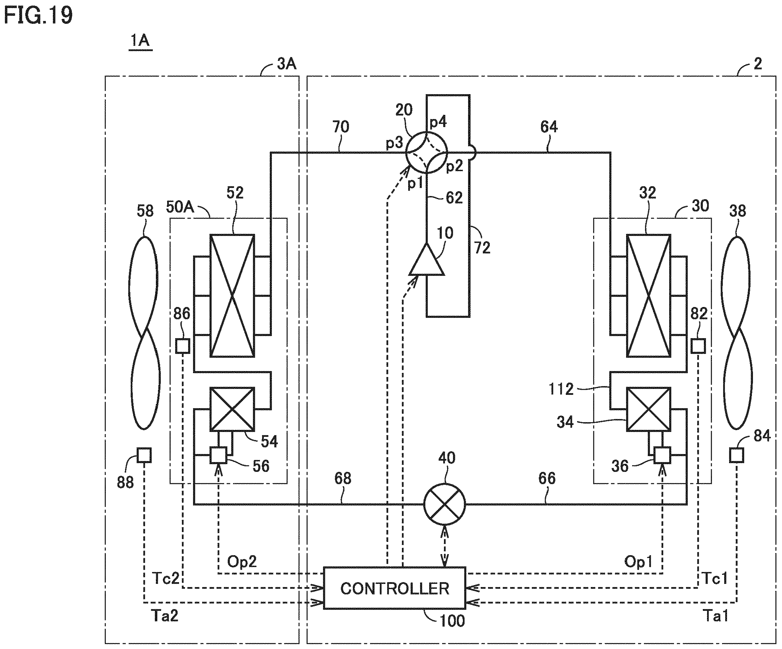

Fig. 19 is an overall configuration diagram of an air conditioner to which a refrigeration cycle apparatus according to Embodiment 4 is applied. Referring to Fig. 19, air conditioner 1A includes outdoor unit 2 and an indoor unit 3A. Indoor unit 3A includes an indoor heat exchanger 50A, fan 58, and temperature sensors 86 and 88. Indoor heat exchanger 50A includes main heat exchanger 52, subcooling heat exchanger 54, and switching device 56.

Main heat exchanger 52 and subcooling heat exchanger 54 are connected in series. Main heat exchanger 52 and subcooling heat exchanger 54 are disposed to be respectively connected to pipes 70 and 68. The configurations of main heat exchanger 52 and subcooling heat exchanger 54 are respectively similar to the configurations of main heat exchanger 32 and subcooling heat exchanger 34 of outdoor heat exchanger 30. As described above, also Embodiment 4 including main heat exchanger 52 and subcooling heat exchanger 54 has enhanced performance (surface coefficient of heat transfer) of indoor heat exchanger 50A during heating operation.

The configuration of switching device 56 is also similar to the configuration of switching device 36 of outdoor heat exchanger 30. Specifically, switching device 56 is configured to switch between flowing refrigerant, which is output from subcooling heat exchanger 54 to switching device 56 during heating operation, to pipe 68 and returning the refrigerant to subcooling heat exchanger 54. Switching device 56 is controlled in accordance with a control signal Op2 from controller 100, and during heating operation, causes refrigerant to make a detour from subcooling heat exchanger 54 to pipe 68 when air conditioner 1A has a low load.

Temperature sensor 86 detects a condensation temperature Tc2 of refrigerant in indoor heat exchanger 50A and outputs a detected value to controller 100. Temperature sensor 88 detects a temperature Ta2 of the air supplied to indoor heat exchanger 50A by fan 58 and outputs a detected value to controller 100.

With such a configuration, an air conditioner that can achieve high performance in both of the high-load operation and the low-load operation is achieved also when air conditioner 1A performs the heating operation.

Though not specifically shown, also in Embodiment 4, a three-way valve may be adopted in place of switching device 56 as in the modifications of Embodiment 1 and Embodiments 2 and 3, and may include a switching device including a capillary tube. Alternatively, a switching device including a pressure on-off valve and a check valve may be adopted, or a heat exchanger having a configuration similar to that of main heat exchanger 32A (Fig. 18) in place of main heat exchanger 52 may be adopted.

It is to be understood that the embodiments disclosed herein are presented for the purpose of illustration and non-restrictive in every respect. It is therefore intended that the scope of the present invention is defined by claims, not only by the embodiments described above, and encompasses all modifications and variations equivalent in meaning and scope to the claims.

REFERENCE SIGNS LIST

1, 1A: air conditioner, 2: outdoor unit, 3, 3A: indoor unit, 10: compressor, 20: four-way valve, 30, 30A-30D: outdoor heat exchanger, 32, 32A, 52, 202: main heat exchanger, 34, 34A, 54, 204: subcooling heat exchanger, 36, 36B, 36C, 56: switching device, 36A: three-way valve, 38, 58: fan, 40: expansion valve, 50, 50A: indoor heat exchanger, 62-72, 112-115, 140, 206, 210, 212: pipe, 82-88: temperature sensor, 100: controller, 120, 120A, 208A-208C: heat transfer tube, 130, 132: solenoid valve, 134: capillary tube, 136, 136A: pressure on-off valve, 138: check valve, 152: diaphragm, 154 noncondensable gas, 156: temperature sensitive cylinder, 158: valve body, 160: valve seat, 162: spring, p1-p7 port.

**Claims**

1. A refrigeration cycle apparatus comprising a refrigerant circuit in which a compressor, a condenser, an expansion valve, and an evaporator are connected in a loop by refrigerant pipes,
   the condenser including

   a main heat exchanger,
   a subcooling heat exchanger configured to allow refrigerant from the main heat exchanger to flow through the subcooling heat exchanger, and
   a bypass circuit configured to cause the refrigerant to make a detour from the subcooling heat exchanger to an exit side of the condenser.

2. The refrigeration cycle apparatus according to claim 1, wherein
   the main heat exchanger includes a plurality of paths connected in parallel with each other,
   the subcooling heat exchanger includes at least one path, and
   the subcooling heat exchanger has a path number smaller than a path number of the main heat exchanger.

3. The refrigeration cycle apparatus according to claim 1, wherein a heat transfer tube of the subcooling heat exchanger has a tube diameter smaller than a tube diameter of a heat transfer tube of the main heat exchanger.

4. The refrigeration cycle apparatus according to any one of claims 1 to 3,
   wherein the condenser further includes a capillary tube provided in the bypass circuit.

5. The refrigeration cycle apparatus according to any one of claims 1 to 4,
   wherein the bypass circuit is configured to
   be interrupted during a first load operation, and

cause the refrigerant to make a detour to the exit side of the condenser during a second load operation with an operation load lower than an operation load of the first load operation.

6. The refrigeration cycle apparatus according to any one of claims 1 to 4,
wherein the bypass circuit is configured to
be interrupted when a temperature difference between a condensation temperature of the condenser and an outdoor air temperature is a first temperature difference, and
cause the refrigerant to make a detour to the exit side of the condenser when the temperature difference is a second temperature difference smaller than the first temperature difference.

7. The refrigeration cycle apparatus according to any one of claims 1 to 4,
wherein
the condenser further includes a pressure on-off valve of mechanical type provided in the bypass circuit, and
the pressure on-off valve is configured to

be closed when a pressure of the refrigerant flowing in the condenser is a first pressure, and
be opened when the pressure is a second pressure lower than the first pressure.

8. The refrigeration cycle apparatus according to claim 7, wherein the condenser further includes a check valve provided on an exit side of the pressure on-off valve.

FIG.1

**FIG.2**

COOLING OPERATION

**FIG.3**

HEATING OPERATION

FIG.4

<u>HIGH-LOAD OPERATION</u>

206 — 202

208A

GAS PHASE — 208B

208C — LIQUID PHASE

GAS-LIQUID
TWO-PHASE
STATE

210 — 204 — 212

FIG.5

LOW-LOAD OPERATION

206

202

208A

GAS PHASE

208B

208C

LIQUID PHASE

GAS-LIQUID
TWO-PHASE
STATE

210

204 212

## FIG.6

## FIG.7

FIG.8

FIG.9

FIG.10

```
                    ┌─────────────┐
                    │    START    │
                    └──────┬──────┘
                           │           ┌─ S10
          ┌────────────────▼─────────────────┐
          │ OBTAIN CONDENSATION              │
          │ TEMPERATURE Tc1 AND              │
          │ OUTDOOR AIR TEMPERATURE Ta1      │
          └────────────────┬─────────────────┘
                           │           ┌─ S20
          ┌────────────────▼─────────────────┐
          │ CALCULATE TEMPERATURE            │
          │ DIFFERENCE ΔT1 (= Tc1 − Ta1)     │
          └────────────────┬─────────────────┘
                           │           ┌─ S30
                    ╱──────▼──────╲         NO
            ╱───────              ───────╲──────────────┐
            ╲      ΔT1 > K1 ?            ╱               │
              ╲───────              ───╱                │
                     ╲─────┬─────╱                      │
                           │ YES    ┌─ S40              │         ┌─ S60
          ┌────────────────▼─────────────────┐  ┌───────▼──────────────────────┐
          │ DETERMINE THAT LOAD IS HIGH      │  │ DETERMINE THAT LOAD IS LOW    │
          └────────────────┬─────────────────┘  └───────┬──────────────────────┘
                           │           ┌─ S50            │         ┌─ S70
          ┌────────────────▼─────────────────┐  ┌───────▼──────────────────────┐
          │ CONTROL SOLENOID VALVES          │  │ CONTROL SOLENOID VALVES       │
          │ 130 AND 132 RESPECTIVELY         │  │ 130 AND 132 RESPECTIVELY      │
          │ TO BE OPENED AND CLOSED          │  │ TO BE CLOSED AND OPENED       │
          └────────────────┬─────────────────┘  └───────┬──────────────────────┘
                           │◄───────────────────────────┘
                    ┌──────▼──────┐
                    │   RETURN    │
                    └─────────────┘
```

FIG.11

FIG.12

```
                    ┌─────────────┐
                    │    START    │
                    └──────┬──────┘
                           │          ╭S110
        ┌──────────────────▼──────────────────┐
        │ OBTAIN CONDENSATION                  │
        │ TEMPERATURE Tc1 AND                  │
        │ OUTDOOR AIR TEMPERATURE Ta1          │
        └──────────────────┬──────────────────┘
                           │          ╭S120
        ┌──────────────────▼──────────────────┐
        │ CALCULATE TEMPERATURE                │
        │ DIFFERENCE ΔT1 (= Tc1 - Ta1)         │
        └──────────────────┬──────────────────┘
                           │          ╭S130
                   ╱───────▼───────╲        NO
                  ⟨    ΔT1>K1 ?     ⟩────────────────────┐
                   ╲───────────────╱                     │
                           │ YES     ╭S140               │          ╭S160
        ┌──────────────────▼──────────────┐   ┌──────────▼──────────────────────┐
        │ DETERMINE THAT LOAD IS HIGH      │   │ DETERMINE THAT LOAD IS LOW       │
        └──────────────────┬──────────────┘   └──────────┬──────────────────────┘
                           │         ╭S150                │         ╭S170
        ┌──────────────────▼──────────────┐   ┌──────────▼──────────────────────┐
        │ CONTROL SUCH THAT PORTS          │   │ CONTROL SUCH THAT PORTS          │
        │ p5 AND p7 OF THREE-WAY VALVE     │   │ p5 AND p6 OF THREE-WAY VALVE     │
        │ 36A ARE COMMUNICATIVELY          │   │ 36A ARE COMMUNICATIVELY          │
        │ CONNECTED WITH EACH OTHER        │   │ CONNECTED WITH EACH OTHER        │
        └──────────────────┬──────────────┘   └──────────┬──────────────────────┘
                           │                             │
                           ◄─────────────────────────────┘
                           │
                    ┌──────▼──────┐
                    │   RETURN    │
                    └─────────────┘
```

# FIG.13

FIG.14

FIG.15

136                                             WHEN VALVE IS CLOSED

152

113

158

162

160

140

FIG.16

136                                             WHEN VALVE IS OPEN

152                                   154

113

156

158

162
160

140

FIG.17

136A

152                    154

113

158

162

160

140

FIG.18

30D

64

120A

32A

112

120    34

66

113

115

130    114

132

36

FIG.19

EP 3 819 555 A1

## INTERNATIONAL SEARCH REPORT

| International application No. |
|---|
| PCT/JP2018/025506 |

**A. CLASSIFICATION OF SUBJECT MATTER**

Int. Cl. F25B1/00(2006.01)i, F25B6/04(2006.01)i, F25B39/04(2006.01)i,
F25B41/04(2006.01)i

According to International Patent Classification (IPC) or to both national classification and IPC

**B. FIELDS SEARCHED**

Minimum documentation searched (classification system followed by classification symbols)

Int. Cl. F25B1/00, F25B6/04, F25B39/04, F25B41/04

Documentation searched other than minimum documentation to the extent that such documents are included in the fields searched

Published examined utility model applications of Japan      1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2009-041829 A (PANASONIC CORP.) 26 February | 1-2 |
| Y | 2009, claims, paragraphs [0004]-[0014], fig. 1, 2 | 3-5, 7-8 |
| A | (Family: none) | 6 |
| Y | JP 2010-048473 A (SHARP CORP.) 04 March 2010, claim 1, paragraphs [0003], [0022]-[0034], fig. 1, 2 (Family: none) | 3-5, 7-8 |
| Y | JP 2005-241067 A (MITSUBISHI HEAVY INDUSTRIES, LTD.) 08 September 2005, paragraphs [0035]-[0039], fig. 2 (Family: none) | 4-5, 7-8 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26.09.2018 | 09.10.2018 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
|---|
| PCT/JP2018/025506 |

C (Continuation). DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 154667/1981 (Laid-open No. 060168/1983) (SANYO ELECTRIC CO., LTD.) 22 April 1983, claims, all drawings (Family: none) | 4-5, 7-8 |
| Y | Microfilm of the specification and drawings annexed to the request of Japanese Utility Model Application No. 121871/1973 (Laid-open No. 070554/1975) (DAIKIN INDUSTRIES, LTD.) 21 June 1975, claims, description, page 6, lines 3-19, fig. 1 (Family: none) | 5 |
| Y | JP 07-280362 A (NIPPONDENSO CO., LTD.) 27 October 1995, claims, paragraphs [0041]-[0043], fig. 6 (Family: none) | 7-8 |
| Y | Microfilm of the specification and drawings annexed to the request of Japanese Utility Model Application No. 114313/1983 (Laid-open No. 023673/1985) (HITACHI, LTD.) 18 February 1985, claims, fig. 4 (Family: none) | 8 |
| A | JP 2012-117708 A (FUJITSU GENERAL LTD.) 21 June 2012, entire text, all drawings (Family: none) | 1-8 |
| A | JP 42-016278 B1 (TOYO CARRIER ENGINEERING CO., LTD.) 04 September 1967, entire text, all drawings (Family: none) | 1-8 |
| A | JP 06-323674 A (HITACHI, LTD.) 25 November 1994, entire text, all drawings (Family: none) | 1-8 |
| A | WO 2018/055739 A1 (MITSUBISHI ELECTRIC CORP.) 29 March 2018, entire text, all drawings (Family: none) | 1-8 |
| A | JP 2016-510392 A (MITSUBISHI ELECTRIC CORP.) 07 April 2016, entire text, all drawings & US 2014/0260386 A1 & GB 2527457 A & WO 2014/141724 A2 & CA 2903697 A1 & SE 1500399 A | 1-8 |

Form PCT/ISA/210 (continuation of second sheet) (January 2015)

**INTERNATIONAL SEARCH REPORT**

International application No.

PCT/JP2018/025506

C (Continuation).  DOCUMENTS CONSIDERED TO BE RELEVANT

| Category* | Citation of document, with indication, where appropriate, of the relevant passages | Relevant to claim No. |
|---|---|---|
| A | WO 2018/029784 A1 (MITSUBISHI ELECTRIC CORP.) 15 February 2018, entire text, all drawings & EP 3315876 A1 | 1-8 |
| A | WO 2017/042649 A1 (HITACHI-JOHNSON CONTROLS AIR CONDITIONING, INC.) 16 March 2017, entire text, all drawings & JP 2017-53566 A & CN 108027188 A | 1-8 |

Form PCT/ISA/210 (continuation of second sheet) (January 2015)

EP 3 819 555 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017219216 A